# EUROPÄISCHE PATENTANMELDUNG

(11) **EP 1 202 050 A2**
(43) Veröffentlichungstag der Anmeldung: **02.05.2002**
(21) Anmeldenummer: 01250376.9
(22) Anmeldetag: 25.10.2001
(51) Int. Cl.: G01N 27/447

(54) **Verfahren zur Multi-Fluoreszenz-Detektion**

(30) Priorität: 27.10.2000 DE 10054426
(71) Anmelder: IOM Innovative optische MesstechniK GmbH, 12489 Berlin (DE)
(72) Erfinder: Stein, Karsten, 10245 Berlin (DE); Pfeifer, Lutz, 12487 Berlin (DE); Lehmann, André, 12559 Berlin (DE)
(74) Vertreter: Hengelhaupt, Jürgen D., Dipl.-Ing.

(57) **Zusammenfassung**

Die Erfindung betrifft ein Verfahren zur Multi-Fluoreszenz-Detektion von Fluorophoren.

Die Aufgabe der Erfindung, ein gattungsgemässes Verfahren zu entwickeln, mit dem die beschriebenen Nachteile des Standes der Technik vermieden werden und mit dem eine hochempfindliche und schnelle Detektion von Multifluoreszenzen von Fluorophoren im Bereich von Sub-Nanosekunden bis zu einigen Millisekunden gleichzeitig gewährleistet ist, wird durch eine simultane Messung der Abklingzeit der Fluoreszenzen gelöst, wobei die Anregungswellenlängen für die einzelnen Fluorophore durch ein optisches Delay 4 im Bereich von Sub-Nanosekunden bis zu einigen Millisekunden verzögert auf die zu untersuchenden Objekte geführt werden, so daß die Fluoreszenzen nacheinander angeregt und detektiert werden können. Zur Differenzierung zwischen mindestens zwei Fluorophoren wird zusätzlich zu ihrer spektralen Charakteristik das Abklingverhalten der Fluoreszenzvorgänge durch das Verschieben von elektronischen Toren im Nanosekunden-Bereich entlang einer Zeitachse untersucht.

## Beschreibung

Die Erfindung betrifft ein Verfahren zur Multi-Fluoreszenz-Detektion gemäß den Ansprüchen 1, 2 und 3.

Unter einem Fluoreszenzfarbstoff wird sowohl eine im Untersuchungsgegenstand natürlich vorkommende als auch eine zum Zwecke der Markierung, z.B. durch chemische Bindung, hinzugefügte fluoreszierende Molekülespezies verstanden. Weiterhin versteht man unter Fluoreszenzfarbstoff auch durch Gentransfer induzierte Proteinfluoreszenzen, wie z.B. "green fluorescent protein" (GFP), "blue fluorescent protein" (BFP) und deren Abkömmlinge.

Fluoreszenzspektroskopische Meßmethoden erlangen aufgrund der hohen Nachweisempfindlichkeit und Spezifität eine wachsende Bedeutung, insbesondere in der biotechnologischen und medizinischen Diagnostik.

Die Charakterisierung der Eigenschaften von Zellen und Geweben spielt eine große Rolle bei der Erkennung und Lokalisierung von krankhaft verändertem Gewebe, bei der Qualitätskontrolle von Transplantationsmaterialien oder bei der Prozeßsteuerung in der Zellkultivierung.

Zellen besitzen die Eigenschaft, eine charakteristische, bläuliche Fluoreszenz nach Bestrahlung mit kurzwelligem Licht auszusenden. Für dieses Verhalten sind insbesondere zelleigene, am Stoffwechsel beteiligte Moleküle verantwortlich, wie Nicotinamid-Adenin-Dinucleotid (NADH), Flavine, Porphyrine.

Um Fluoreszenz anzuregen, werden die Fluorophore mit monochromatischem Licht im Absorptionsmaximum bestrahlt. Als Anregungsquellen werden entweder gefilterte Lampen oder Laser verwendet. Durch spektrale Filterung der Emission wird die gewünschte Fluoreszenzbande ausgewählt.

Darüber hinaus können laserinduzierte Fluoreszenzsignale allgemein zur Charakterisierung eines Untersuchungsgegenstandes, zum Beispiel von Lösungen oder Oberflächen fester Körper ausgewertet werden.

Die üblichen Verfahren zur Fluoreszenzdetektion sind statische Verfahren, welche Informationen über die Intensität und die spektrale Verteilung des emittierten Lichts zumeist in Form eines statischen Fluoreszenz-spektrums liefern. Über das zeitliche Abklingverhalten der Fluoreszenzen können in der Regel keine Aussagen getroffen werden.

Liegen Proben mit mehreren unterschiedlichen Fluoreszenzmarkierungen vor, werden die einzelnen Fluorophore zeitlich oder räumlich nacheinander nachgewiesen. Dazu ist eine aufwendige Filterwechseleinrichtung (bei Laseranregung mehrere Laser) sowohl bei der Fluoreszenzanregung als auch bei der Fluoreszenzemission nötig.

Beispiele hierfür geben die von den Firmen BMG Labtechnologies GmbH, D-77656 Offenburg, BIO-TEK Kontron Instruments GmbH, D-85375 Neufahrn, Packard Instrument Company, Connecticut/USA, Wallac Distribution GmbH, D-79111 Freiburg, angebotenen Fluorometer.

Nachteilig ist es bei diesen bekannten Geräten, daß keine gleichzeitige Messung der verschiedenen Fluoreszenzmolekül-Spezies, sondern nur eine zeitliche Nacheinandermessung der Proben möglich ist. Diese Messungen sind mit einem unbefriedigend hohen Zeitaufwand, der zum Teil durch den erforderlichen Filterwechsel (Filterräder) bedingt ist, verbunden.

Mehrere Fluorophore können durch die bisher bekannt gewordenen Verfahren nicht gleichzeitig nachgewiesen werden, wenn eine hohe Empfindlichkeit verlangt wird; orts- und zeitveränderliche Proben können nicht detektiert werden. Würden bei Mehrfachmarkierung alle Fluorophore gleichzeitig angeregt und detektiert werden, dann würden die Nachweisgrenzen durch Emissionsüberlagerungen, Lichtstreuung und Anregungsüberlagerung im Detektionskanal derart stark ansteigen, daß bei den meisten analytischen Fragestellungen keine zufriedenstellenden Aussagen gewonnen werden können.

Ein Vierkanal-Fluoreszenzdetektor für die Anwendung in der Kapillar-Elektrophorese (US 6,039,925) versucht das Problem des Filterwechsels zu umgehen, indem er vier in einer Reihe angeordnete Mikrolinsen mit vier Bandpaßfiltern versehen längs einer Kapillare positioniert. Die Probe bewegt sich längs der Kapillare an den vier Detektionspunkten vorbei.

Nachteilig bei dieser Anordnung ist, daß bei Gleichlicht-Anregung ein Übersprechen der Anregungsstrahlung eines Kanals auf einen anderen Detektionskanal nicht vermieden werden kann. Dieses Übersprechen durch Lichtstreuprozesse in der Lösung, in Gläsern und an Grenzflächen kann nie vollständig vermieden werden. Die Selektivität des Simultannachweises der vier verschiedenen Fluorophore muß somit erheblich eingeschränkt bleiben.

Mehrfachfluoreszenzen können bei stationären Simultanmessungen nicht signifikant getrennt detektiert werden.

Aufgabe der Erfindung ist es, ein gattungsgemässes Verfahren zu entwickeln, mit dem die beschriebenen Nachteile des Standes der Technik vermieden werden und mit dem eine hochempfindliche und schnelle Detektion von Multifluoreszenzen von Fluorophoren im Bereich von Sub-Nanosekunden bis zu einigen Millisekunden gleichzeitig gewährleistet ist.

Die Aufgabe der Erfindung wird durch Verfahren gemäß den Merkmalen der Ansprüche 1, 2 und 3 gelöst.

Nach den Merkmalen des Anspruchs 1 werden die Anregungswellenlängen für die einzelnen Fluorophore durch ein optisches Delay im Bereich von Sub-Nanosekunden bis zu einigen Millisekunden verzögert auf die zu untersuchenden Objekte geführt, und zur Differenzierung zwischen mindestens zwei Fluorophoren wird zusätzlich zu ihrer spektralen Charakteristik das Abklingverhalten der Fluoreszenzvorgänge durch das Verschieben von elektronischen Toren im Bereich von Sub-Nanosekunden bis zu einigen Millisekunden entlang einer Zeitachse untersucht.

Durch die Kombination des Prinzips der verzögerten Fluoreszenzanregung mit dem Prinzip der getorten Signalabtastung wird eine maximale Signifikanz der Trennung multipler Fluoreszenzen erreicht.

Nach den Merkmalen des Anspruchs 2 werden die Anregungswellenlängen für die einzelnen Fluorophore durch ein optisches Delay im Bereich von Sub-Nanosekunden bis zu einigen Millisekunden verzögert auf die zu untersuchenden Objekte geführt, so daß die Fluoreszenzen nacheinander angeregt und detektiert werden können.

Bei dem Verfahren zur Multi-Fluoreszenz-Detektion von Fluorophoren durch eine simultane Messung der Abklingzeit der Fluoreszenzen nach Anspruch 3 wird zur Differenzierung zwischen mindestens zwei Fluorophoren zusätzlich zu ihrer spektralen Charakteristik das Abklingverhalten der Fluoreszenzvorgänge durch das Verschieben von elektronischen Toren im Nanosekunden-Bereich entlang einer Zeitachse untersucht. Eine erhöhte Signifikanz der Fluoreszenztrennung kann dabei nur genutzt werden, wenn die verwendeten Fluorphore signifikante Unterschiede der Fluoreszenz-Lebensdauer aufweisen.

Mit den erfindungsgemäßen Verfahren können durch die zusätzlich gewonnene Zeitinformation Substanzen unterschieden werden, deren spektrale Eigenschaften sich gleichen.

Neben einer hohen Empfindlichkeit kann eine maximale Selektivität bei der Signaldetektion erreicht werden durch eine unterschiedliche Positionierung eines elektronischen Zeittores.

Bei der Anwendung des Verfahrens auf die Detektion von mehreren,unterschiedlich fluoreszenzmarkierten gelösten Proben in der Flüssigkeits-Chromatographie ist der Nachweis aller Fluoreszenzmarkierungen zur gleichen Zeit am gleichen Ort möglich, wodurch Peakveränderungen im Chromatogramm vermieden werden können.

Es ist eine selektive Detektion von durch die Chromatographie nicht räumlich getrennten Proben durch ihre Fluoreszenzeigenschaften gewährleistet.

Bei der Anwendung des Verfahres auf die Detektion von mehreren unterschiedlichen fluoreszierenden Proben in allen elektrophoretischen Trennverfahren ist der Nachweis aller Fluoreszenzen in Echtzeit am gleichen Ort möglich, wodurch Banden- bzw. Peakveränderungen im Elektrophoretogramm vermieden werden können.

Es ist eine selektive Detektion von durch die Elektrophorese nicht räumlich getrennten Proben durch ihre Fluoreszenzeigenschaften gewährleistet.

Bei der Anwendung des Verfahrens auf die Detektion von Fluoreszenzfarbstoffen in Multiwellplatten ist die Erfassung aller Fluoreszenzfarbstoffe quasi gleichzeitig (in Echtzeit) innerhalb nur eines Scan-Vorgangs ohne zeitraubendes Umschalten von Filtern möglich.

Alle Probenfluoreszenzen können unter Vermeidung eines Temperaturganges, wie er bei sequentiellen Meßverfahren auftreten kann, erfaßt werden.

Die Kinetik mehrerer unterschiedlich markierter Proben kann simultan erfaßt werden.

Bei der Anwendung des Verfahrens auf die Polymerase-Kettenreaktion (PCR), und hierbei insbesondere auf die quantitative und die Multiplex-PCR, können während eines Amplifikations-Vorganges simultan mehrere amplifizierte Fluoreszenzfarbstoffe in Echtzeit quantitativ detektiert und somit eine Endpunktbestimmung, als Abbruchbedingung für einen erfolgreichen Vorgang, vorgenommen werden.

Bei der Anwendung des Verfahrens auf die Mehrfach-Fluoreszenzdetektion an lebendem Gewebe besteht die Möglichkeit der quantitativen oder semiquantitativen Erfassung der Probenfluoreszenzen oder deren Verhältnisse durch die Vermeidung von stochastischen oder repititiven Bewegungen der Gewebe durch Pulsschlag, Lungenbewegung oder anderen Ursachen. Der Einfluß einer hinreichend langsamen Veränderung der geometrischen Anordnung von Anregungs- und Detektionsoptik auf die Verhältnismessung der unterschiedlich fluoreszierenden Proben wird vermieden.

Bei der Anwendung auf die Mehrfach-Fluoreszenzdetektion auf planaren, partikulären, fibrilären Trägern wie DNA/Protein-Chip können die Proben ohne Anhalten der Mechanik gescannt werden, da die Bewegung keinen Einfluß auf die Verhältnisse der Fluoreszenzsignale hat.

Die erfindungsgemäßen Verfahren eröffnen eine große Anwendungsbreite auf Gebieten, in denen konventionelle Fluoreszenzspektrometer versagen, wie zum Beispiel Untersuchungen an Proben in gelöster Form, Differenzierung von Gewebezuständen, Stoffwechseluntersuchungen, Wachstumsphasen biotechnologischer Zellkulturen in Bioreaktoren, analythische Trennverfahren wie CZE, HPLC.

Zweckmässige Ausgestaltungen der Erfindung sind in den Unteransprüchen beschrieben.

Nachfolgend wird die Erfindung anhand eines konkreten Ausführungsbeispiels näher dargestellt. Die zugehörige Zeichnung zeigt:
- Fig. 1 :: die schematische Darstellung eines konkreten Ausführungsbeispiels für vier verschiedene Fluoreszenzmarker und
- Fig. 2 :: die grafische Darstellung des Verhaltens von Fluoreszenzsignalen zweier Farbstoffe über der Zeit.

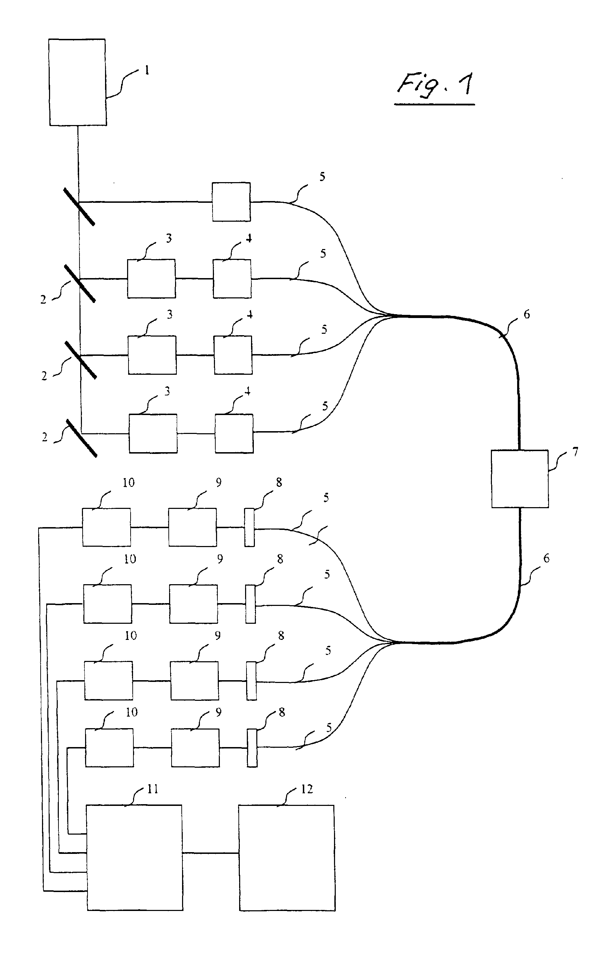

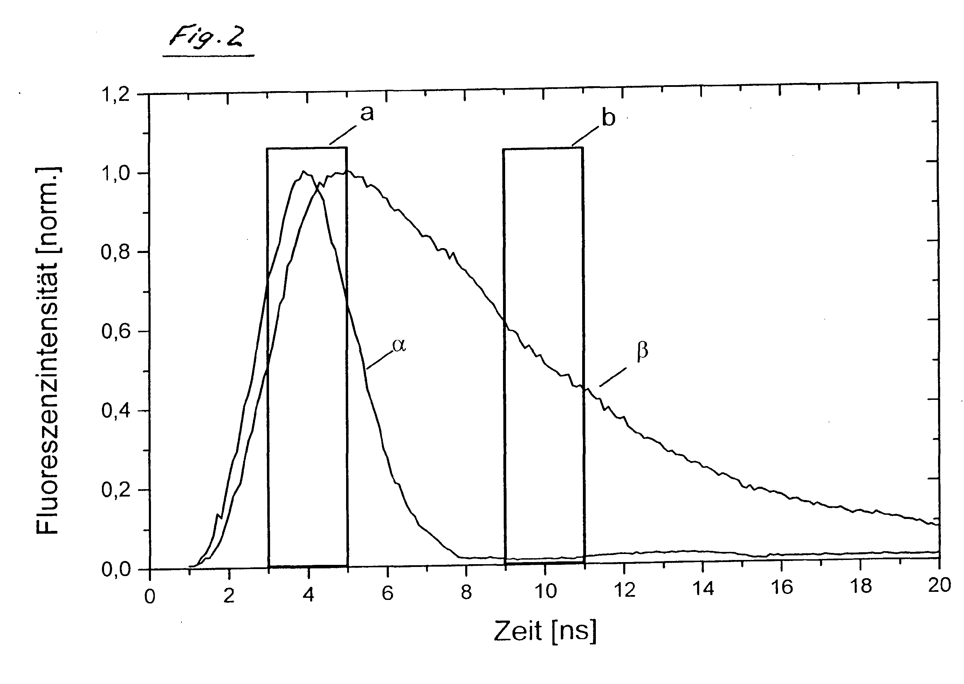

Entsprechend der Darstellung in der Fig. 1 wird als Anregungsquelle ein Impulslaser 1 verwendet, z.B. ein Stickstofflaser mit einer Impulsbreite von ca. 1 ns. Die emittierte Strahlung wird z.B. über halbdurchlässige Spiegel 2 aufgeteilt und n Farbstofflasern 3 zugeführt. Die Farbstofflaser 3 emittieren entsprechend dem eingesetzten Laserfarbstoff die nötige Anregungsstrahlung, wobei der Impulslaser 1 auch direkt als Anregungsquelle benutzt werden kann. Die Anregungsstrahlung wird über ein optisches Delay 4, z.B. Glasfasern, derart verzögert, daß immer nur ein in der Probe enthaltener Fluoreszenzfarbstoff nahe seinem Absorptionsmaximum angeregt wird. Durch die Verzögerung muß sichergestellt sein, daß der jeweilige Fluoreszenzfarbstoff bis zum nächsten Anregungsvorgang vollständig abgeklungen ist. Das setzt die Kenntnis der Lebensdauer der nachzuweisenden Fluoreszenzfarbstoffe voraus. Die Anregungsstrahlung wird der Fluoreszenzprobe 7 über Lichtwellenleiter 5, 6 zugeführt. Die Fluoreszenzsignale werden auf einen optischen Detektor 9, zum Beispiel über die faseroptischen Verbindungen 5,6, geleitet. Die Fluoreszenzsignale können zusätzlich über Filter 8 spektral gefiltert werden. Der Detektor 9 muß im Zeitbereich den Fluoreszenzsignalen annähernd folgen können (z.B. Fotodioden, SEV). Das elektrische Signal des Detektors 9 ist damit ein Abbild der angeregten Fluoreszenz im Zeitbereich (Fig.2). Ein getorter Integrator 10, mit einer Torzeit deutlich kürzer als die Lebensdauer der Fluoreszenz (z.B. 1 ns), kann zu einem definierten Zeitpunkt das Signal abtasten.

Entsprechend der Darstellung in der Fig. 2 kann, unter der Voraussetzung, daß die nachzuweisenden Fluoreszenzfarbstoffe A und B unterschiedliche Lebensdauern haben, das Fluoreszenzsignal β, gemessen in der Torlage b, vollständig vom Fluoreszenzsignal α des Farbstoffes A, gemessen in der Torlage a, abgetrennt werden. Dieses Verfahren ermöglicht die Trennung von Fluoreszenzfarbstoffen auch dann, wenn sie sich nicht durch die Wahl der Anregungswellenlänge oder/und der Emissions-wellenlänge trennen lassen.

Das elektrische Signal, welches der getorte Integrator 10 liefert, kann danach in einem A/D-Wandler 11 digitalisiert und in einem PC 12 weiterverarbeitet werden.

### Bezugszeichenliste

- 1: Impulslaser
- 2: Strahlteilerspiegel
- 3: Farbstofflaser
- 4: Delaymodul
- 5: Lichtwellenleiter
- 6: Lichtwellenleiter
- 7: Probe
- 8: Filter
- 9: Photodetektor
- 10: getorter Integrator
- 11: Analog-Digital-Wandler
- 12: Rechner (PC)

- a: Torlage
- b: Torlage

- α/A: Fluoreszenzsignal/Farbstoff
- β/B: Fluoreszenzsignal/Farbstoff

## Patentansprüche

1. Verfahren zur Multi-Fluoreszenz-Detektion von Fluorophoren durch eine simultane Messung der Abklingzeit der Fluoreszenzen, wobei die Anregungswellenlängen für die einzelnen Fluorophore durch ein optisches Delay (4) im Bereich von Sub-Nanosekunden bis zu einigen Millisekunden verzögert auf die zu untersuchenden Objekte (7) geführt werden, so daß die Fluoreszenzen nacheinander angeregt und detektiert werden können, und wobei zur Differenzierung zwischen mindestens zwei Fluorophoren zusätzlich zu ihrer spektralen Charakteristik das Abklingverhalten der Fluoreszenzvorgänge durch das Verschieben von elektronischen Toren im Nanosekunden-Bereich entlang einer Zeitachse untersucht wird.

2. Verfahren zur Multi-Fluoreszenz-Detektion von Fluorophoren durch eine simultane Messung der Abklingzeit der Fluoreszenzen, wobei die Anregungswellenlängen für die einzelnen Fluorophore durch ein optisches Delay (4) im Bereich von Sub-Nanosekunden bis zu einigen Millisekunden verzögert auf die zu untersuchenden Objekte (7) geführt werden, so daß die Fluoreszenzen nacheinander angeregt und detektiert werden können.

3. Verfahren zur Multi-Fluoreszenz-Detektion von Fluorophoren durch eine simultane Messung der Abklingzeit der Fluoreszenzen, wobei zur Differenzierung zwischen mindestens zwei Fluorophoren zusätzlich zu ihrer spektralen Charakteristik das Abklingverhalten der Fluoreszenzvorgänge durch das Verschieben von elektronischen Toren im Nanosekunden-Bereich entlang einer Zeitachse untersucht wird.

4. Verfahren nach Anspruch 1 und 3, **dadurch gekennzeichnet, daß** das Delay (4) durch Lichtwellenleiter gebildet wird.

5. Verfahren nach Anspruch 2 und 3, **dadurch gekennzeichnet, daß** das elektronische Zeittor im Maximum des Zeitverlaufs der Lebensdauer des Fluoreszenzsignals positioniert wird, um schnell abklingende Fluoreszenzprozesse selektiv zu detektieren.

6. Verfahren nach Anspruch 2 und 3, **dadurch gekennzeichnet, daß** das elektronische Zeittor im Ausklang des Zeitverlaufs der Lebensdauer des Fluoreszenzsignals positioniert wird, um langsam Abklingende Fluoreszenzprozesse selektiv zu detektieren.

7. Verfahren nach den Ansprüchen 1 bis 3, **dadurch gekennzeichnet, daß** mehrere, unterschiedliche Fluoreszenzfarbstoffe in der Flüssigkeits-Chromatographie detektiert werden.

8. Verfahren nach den Ansprüchen 1 bis 3, **dadurch gekennzeichnet, daß** Fluoreszenzfarbstoffe in Multiwellplatten detektiert werden.

9. Verfahren nach den Ansprüchen 1 bis 3, **dadurch gekennzeichnet, daß** eine Mehrfach-Fluoreszenzdetektion an lebendem/totem Gewebe vorgenommen wird.

10. Verfahren nach den Ansprüchen 1 bis 3, **dadurch gekennzeichnet, daß** eine Mehrfach-Fluoreszenzdetektion auf planaren, partikulären, fibrilären Trägern wie DNA-/Protein-Chip vorgenommen wird.

11. Verfahren nach den Ansprüchen 1 bis 3, **dadurch gekennzeichnet, daß** das Verfahren bildgebend und der Detektor eine Kamera ist.

12. Verfahren nach den Ansprüchen 1 bis 3, **dadurch gekennzeichnet, daß** eine Mehrfach-Fluoreszenzdetektion und Endpunktbestimmung während der PCR, insbesondere quantitative und Multiplex PCR, vorgenommen wird.

13. Verfahren nach den Ansprüchen 1 bis 3, **dadurch gekennzeichnet, daß** mehrere Fluoreszenzfarbstoffe in Elektrophorese-Gelen, -kapillaren und -Blots detektiert werden.
